# NEUE EUROPÄISCHE PATENTSCHRIFT

(11) **EP 3 307 666 B2**
(45) Veröffentlichungstag und Bekanntmachung des Hinweises auf die Entscheidung über den Einspruch: **29.05.2024**
(45) Hinweis auf die Patenterteilung: 27.01.2021
(21) Anmeldenummer: 16729859.5
(22) Anmeldetag: 09.06.2016
(51) Int. Cl.: B66B 1/46, G05B 13/00

(54) **AUFZUGSYSTEM MIT PRÄDIKTIVER RUFERZEUGUNG**
ELEVATOR SYSTEM WITH PREDICTIVE CALL GENERATION
SYSTEME D'ASCENSEUR DOTE D'UNE GENERATION D'APPEL PREDICTIVE

(30) Priorität: 10.06.2015 EP 15171297
(43) Veröffentlichungstag der Anmeldung: 18.04.2018
(73) Patentinhaber: INVENTIO AG, 6052 Hergiswil (CH)
(72) Erfinder: TROESCH, Florian, 8045 Zürich (CH); FRIEDLI, Paul, 5453 Remetschwil (CH)
(74) Vertreter: Inventio AG
(86) Internationale Anmeldenummer: PCT/EP2016/063212
(87) Internationale Veröffentlichungsnummer: WO 2016/198548

(56) Entgegenhaltungen:
- EP-A1- 1 189 830
- EP-A1- 2 695 839
- WO-A1-2014/096529
- JP-A- 2009 062 151
- US-A1- 2012 000 733
- US-A1- 2013 245 832

## Beschreibung

Die hier beschriebene Technologie betrifft allgemein ein System mit einem Aufzugsystem, das eine Steuereinrichtung zum Erzeugen eines Rufes hat. Ausführungsbeispiele der Technologie betreffen ausserdem ein Verfahren zum Erzeugen eines Rufes.

Damit ein Passagier einen Aufzug rufen kann, sind Aufzugsysteme bekannt, die entweder ein Stockwerkterminal zur Eingabe der gewünschten Fahrtrichtung (z. B. "Auf-" und "Ab-" Tasten) oder ein Stockwerkterminal zur Eingabe des gewünschten Zielstockwerks haben. Letzteres ermöglichen Aufzugsysteme mit einer Zielrufsteuerung. Es ist auch bekannt, einen Passagier bei der Eingabe eines Rufes zu unterstützen. WO 2014/049201 A1 beschreibt beispielsweise ein Aufzugsystem, in dem für einen Passagier eine Favoritenliste selbstlernend aktualisiert wird. Die Favoritenliste enthält die vom Passagier innerhalb eines Zeitraumes am häufigsten gewünschten Zielstockwerke. Identifiziert das System einen Passagier vor der eigentlichen Eingabe eines Rufes, präsentiert das System diesem Passagier die Favoritenliste zur Auswahl eines Zieles. WO 2014/096529 A1 beschreibt ein Aufzugsystem, in dem eine Aufzugkabine automatisch auf ein Stockwerk gerufen wird, wenn eine Person ihre Wohnung auf diesem Stockwerk verlässt. Dafür ist ein Sensor dieser Wohnung zugeteilt, der das Verlassen der Wohnung feststellt.

US 2013/0245832 A1 beschreibt ein Verfahren, um Geo-Routinen abhängig vom Ort, einer Höhe und einer Bewegungsrichtung eines Nutzers zu ermitteln. Der Nutzer trägt ein Mobiltelefon bei sich, auf den Stockwerken sind mehrere WLAN Router vorhanden, und Sensoren eines Aufzugs ermitteln für jedes Gebäudestockwerk einen Funk-Fingerabdruck. Deutet eine momentane Bewegungsrichtung daraufhin, dass der Nutzer einen Aufzug nutzen möchte, wird ein frühzeitiger Aufzugsruf für diesen Nutzer veranlasst.

EP 1189830 A1 (WO 00/75062 A1) beschreibt ein System, bei dem in einer Aufzugshalle RFID Transponder angeordnet sind, die RFID Responder von Passagieren aktivieren und deren Codes empfangen. Das System erzeugt für die Passagiere automatische Aufzugsrufe.

Die genannten Lösungen basieren auf unterschiedlichen Ansätzen zur Unterstützung eines Passagiers bei der Rufeingabe. Es besteht Bedarf, einen Passagier auf eine verbesserte Art und Weise bei der Rufeingabe zu unterstützen.

Ein Aspekt einer solchen verbesserten Technologie betrifft ein Verfahren zum Erzeugen einer Aktion in einem Gebäude mit mindestens einer Tür und einem Aufzugsystem mit einer Aufzugkabine, die zwischen Stockwerken des Gebäudes verfahrbar ist, nach Anspruch 1.

Ein anderer Aspekt betrifft ein System mit einem Aufzugsystem, in dem eine Aufzugkabine zwischen Stockwerken eines Gebäudes verfahrbar ist, nach Anspruch 12.

Die erzeugte Aktion kann auf verschiedene Situationen angepasst werden. In einem Ausführungsbeispiel umfasst die Aktion einen Zielruf, der erzeugt wird, wenn die Verbindungsdaten einem gespeicherten Verhaltensmuster mit einer Nutzung des Aufzugsystems entsprechen, wobei der Zielruf ein Einsteigestockwerk und ein Zielstockwerk definiert, und wobei das Zielstockwerk in diesem Verhaltensmuster festgelegt ist. In einem Ausführungsbeispiel umfasst die Aktion einen Entriegelungsbefehl für eine Tür des Gebäudes, der erzeugt wird, wenn die Verbindungsdaten einem gespeicherten Verhaltensmuster entsprechen, das ein Entriegeln einer Tür erfordert.

In den hier beschriebenen Ausführungsbeispielen wird ein aktuelles Verhalten eines Passagiers mit gespeicherten Verhaltensmustern, die aus dem Verhalten des Passagiers in der Vergangenheit abgeleitet sind, verglichen. Stimmt das aktuelle Verhalten beispielsweise mit einem Verhaltensmuster, das eine Aufzugfahrt von einem Einsteigestockwerk auf ein Zielstockwerk umfasst, überein, wird ein für diesen Passagier spezifischer Zielruf automatisch und ohne weiteres Zutun des Passagiers erzeugt. Aus der Übereinstimmung des aktuellen Verhaltens mit Verhalten in der Vergangenheit kann somit das zu erwartende Verhalten des Passagiers vorhergesagt werden.

Die Technologie unterstützt den Passagier bei der Zieleingabe aber auch dann, wenn ein Vergleich aus dem aktuellen Verhalten und den Verhaltensmustern keine eindeutige Übereinstimmung liefert. In einem solchen Fall können dem Passagier ein oder mehrere Zielvorschläge auf einem vom Passagier mitgeführten mobilen Gerät (z. B. Smartphone) angezeigt werden. Mehrere Zielvorschläge können dabei in einer Rangliste angeordnet sein, die nach abnehmender Übereinstimmung gelistet sein können. Der Passagier kann daraus einen Zielvorschlag auswählen, wodurch ein entsprechender Zielruf erzeugt wird.

Die Technologie erkennt aus dem Vergleich auch, wenn der Passagier tendenziell keinen Aufzug nutzen möchte. Dadurch wird vermieden, dass unnötigerweise Zielvorschläge angezeigt oder Zielrufe erzeugt werden, wenn der Passagier beispielsweise aufgrund seines momentanen Aufenthaltsorts oder seiner Bewegungsrichtung sehr wahrscheinlich keine Aufzugfahrt wünscht.

Die Technologie bietet Flexibilität hinsichtlich der Speicherung der Verbindungsdaten einschliesslich der daraus abgeleiteten Verhaltensmuster. Beispielsweise können aus Datenschutzgründen diese Daten in einem Ausführungsbeispiel ausschliesslich im passagiereigenen mobilen Gerät gespeichert werden. Zur Verarbeitung werden die Daten ausgelesen, beispielsweise von der Steuereinrichtung; sie werden dort aber nicht über die Verarbeitungsdauer hinaus gespeichert. Alternativ dazu können die Daten auch mittels passender Softwareanwendungen im mobilen Gerät verarbeitet werden. Das mobile Gerät sendet dann das Ergebnis dieser Verarbeitung, beispielsweise einen Zielruf, an das Aufzugsystem. In einem anderen Ausführungsbeispiel, wenn z. B. keine Bedenken bzgl. Datenschutzes bestehen, können die Daten auch in einer Speichereinrichtung des Aufzugsystems oder eines Gebäudemanagementsystems gespeichert werden. Die Verarbeitung der Daten findet dann beispielsweise in der Steuereinrichtung des Aufzugsystems statt.

Die Technologie bietet auch Flexibilität hinsichtlich des Erkennens der Verbindungsdaten. Die Verbindungsdaten können beispielsweise durch die Steuereinrichtung des Aufzugsystems erkannt werden. Dazu ist die Steuereinrichtung in einem Ausführungsbeispiel mit Sensoren vernetzt, die jeweils bei einer kommunikativen Verbindung mit dem mobilen Gerät ein Sensorsignal erzeugen, das z. B. die Steuereinrichtung empfängt. Da für jeden Sensor der Standort im Gebäude bekannt ist, kann mithilfe des Sensorsignals auf den Aufenthaltsort des mobilen Geräts geschlossen werden. Ist aus Datenschutzgründen nicht gewünscht, dass die Steuereinrichtung des Aufzugsystems die Bewegungen erkennt, kann in einem anderen Ausführungsbeispiel das Erkennen durch das mobile Gerät ohne Beteiligung der Steuereinrichtung erfolgen. Dazu sind nicht vernetzte Funksensoren, z. B. Bluetooth Beacons, im Gebäude angeordnet, die jeweils mit dem mobilen Gerät kommunizieren, sobald es in Reichweite eines Funksensors ist. Die Bestimmung des Aufenthaltsorts des mobilen Geräts erfolgt somit immer über das mobile Gerät.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung einer beispielhaften Situation auf einem Gebäudestockwerk, das von einem Aufzugsystem mit automatischer Rufeingabe bedient wird;
- Fig. 2: eine schematische Illustration beispielhafter Kommunikationen eines mobilen Geräts;
- Fig. 3: eine schematische Darstellung eines mobilen Geräts, das verschiedene Auswahlfelder anzeigt;
- Fig. 4: eine beispielhafte Darstellung eines Verfahrens zum Erzeugen eines Zielrufes anhand eines schematischen Ablaufdiagramms;
- Fig. 4a: eine beispielhafte Darstellung einer Variante eines Verfahrens zum Erzeugen eines Zielrufes anhand eines schematischen Ablaufdiagramms; und
- Fig. 5: eine schematische Darstellung eines Ausführungsbeispiels des Aufzugsystems in einem Gebäude, das in Seitenansicht gezeigt ist.

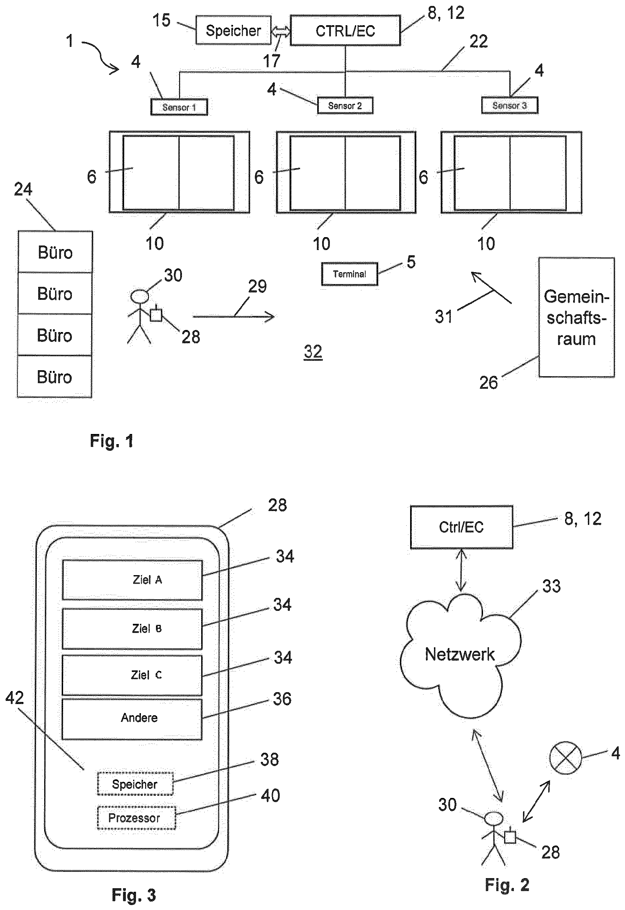

Fig. 1 ist eine schematische Darstellung einer beispielhaften Situation auf einem Stockwerk eines Gebäudes 2, das von einem Aufzugsystem 1 mit automatischer Rufeingabe bedient wird. In dieser Darstellung handelt es sich um ein Stockwerk mit Büros 24 (Office), einem Gemeinschaftsraum 26 (Common Facility), einem Vorraum 32, in dem sich ein Passagier 30 mit einem passagiereigenen mobilen Gerät 28 bewegen kann, und einem Stockwerkterminal 5, das im Vorraum 32 angeordnet ist. Unter dem Begriff "Passagier" ist hier allgemein eine Person zu verstehen, die sich im Gebäude 2 aufhält, unabhängig davon, ob sie das Aufzugsystem 1 nutzt oder nicht. Es versteht sich, dass es sich bei dem Gebäude 2 prinzipiell um jegliche Art von mehrstöckigem Gebäude (z. B. Wohnhäuser, Hotels) oder ein Schiff handeln kann.

Das Aufzugsystem 1 ist durch drei Aufzugkabinen 10, jeweils mit einer Aufzugtür 6, und einem drei Sensoren 4 umfassenden beispielhaften Sensorsystem gemäss einem ersten Ausführungsbeispiel dargestellt. Das Sensorsystem ist über eine Leitung 22 mit einer Steuereinrichtung 8, 12 verbunden. Jeder der Sensoren 4 ist in diesem Ausführungsbeispiel einer Aufzugkabine 10 zugeordnet, z. B. über oder neben der jeweiligen Aufzugkabine 10 angeordnet. Der Fachmann erkennt jedoch, dass eine Zuordnung zu den Aufzugkabinen 10 nicht notwendig und optional ist und dass die Sensoren 4 - zusätzlich oder alternativ zu den Sensoren 4, die den Aufzugkabinen 10 zugeordnet sind - auch an anderen Stellen (z. B. in den Büros 23 oder im Gemeinschaftsraum 26, an den Büro- und/oder Stockwerktüren (z. B. an deren Türschlössern) oder an Treppenzugängen) angeordnet sein können. Ebenfalls können mehr oder weniger Sensoren 4 auf dem Stockwerk vorhanden sein.

Die durch die Leitung 22 mit der Steuereinrichtung 8, 12 vernetzten Sensoren 4 haben im Netzwerk jeweils eine individuelle Kennung. Die Kennung identifiziert einen Sensor 4 im Netzwerk, dem dort ein festgelegter Standort (Aufstellungsort) im Gebäude 2 zugeordnet ist. Mit der Kennung des Sensors 4 kann Information über den Standort des Sensors 4 ermittelt werden. Diese Information umfasst beispielsweise das Stockwerk, Details zum Standort auf dem Stockwerk (z. B. über einer Aufzugkabine 10) und/oder Angaben über auf dem Stockwerk zusätzlich vorhandene und evtl. benachbarte Sensoren 4.

Die Sensoren 4 basieren auf einer bekannten Funktechnologie, beispielsweise RFID, NFC, WiFi oder Bluetooth; letztere ist nachfolgend detaillierter beschrieben ist. In einem Ausführungsbeispiel registriert die Steuereinrichtung 8, 12 eine kommunikative (Funk)Verbindung zwischen einem Sensor 4 und dem mobilen Gerät 28.

In einem zweiten Ausführungsbeispiel des Sensorsystems sind die Sensoren 4 nicht mit der Steuereinrichtung 8, 12 verbunden, so dass die Leitung 22 entfallen kann. Derartige Sensoren 4 sind beispielsweise Festpunktmarkierungen, die mit Bluetooth Technologie ausgestattet sind. Eine Festpunktmarkierung 4 ist daher im Folgenden auch als "Beacon 4" oder als "Bluetooth Beacon 4" bezeichnet. Die Kommunikation zwischen dem mobilen Gerät 28 (Smartphone), das Bluetooth fähig ist, und den Beacons 4 erfolgt somit gemäss einer Version eines Bluetooth Standards, z. B. Bluetooth Standard 4.0 (Bluetooth Low Energy (BLE)).

Gemäss einer Version des Bluetooth Standards erfolgt ein erster kommunikativer Kontakt (d. h. ein sogenanntes Pairing) zwischen dem mobilen Gerät 28 und einem Beacon 4, während dem die Kommunikationspartner Kenndaten austauschen, so dass sie sich beim nächsten Mal automatisch wiedererkennen. Sobald das mobile Gerät 28 nach erfolgtem Pairing wieder in Empfangsreichweite eines der Beacons 4 kommt (bei aktivierter Bluetooth Funktion), bauen der betreffende Beacon 4 und das mobile Gerät 28 automatisch eine kommunikative Verbindung auf. Dem entsprechend wird die Verbindung unterbrochen, wenn das Smartphone die Empfangsreichweite wieder verlässt. Im Folgenden ist angenommen, dass - wenn ein Pairing in der verwendeten Bluetooth Version vorgesehen ist - das Pairing erfolgt ist.

Der Fachmann erkennt, dass ein derartiges Pairing eine Möglichkeit ist, den Kommunikationspartner zu erkennen, aber nicht unbedingt nötig ist. Ein Beacon 4 kann beispielsweise immer die gleichen Daten, z. B. "ID = 5" aussenden. In einem solchen Fall wird kein Pairing benötigt, damit das mobile Gerät 28 erkennt, dass der Beacon 4 mit der "ID = 5" nahe ist.

Fig. 2 illustriert Interaktionen des mobilen Geräts 10 mit dem Beacon 4 und einem Kommunikationsnetzwerk 33. An das Kommunikationsnetzwerk 33 ist im gezeigten Ausführungsbeispiel die Steuereinrichtung 8, 12 gekoppelt. In diesem Ausführungsbeispiel speichert jeder Beacon 4 eine individuelle Kennung (ID), die bei einer kommunikativen Verbindung an das mobile Gerät 28 übermittelt wird. Das mobile Gerät 28 übermittelt die Kennung eines Beacons 4 an eine Datenbank, in der die Kennung mit Daten zu einem Ort, an dem dieser Beacon 4 angeordnet ist, verknüpft ist. Die Datenbank kann in der Steuereinrichtung 8, 12 oder einem anderen Speichersystem 15 vorhanden sein. Die Übermittlung an die Datenbank kann über das Kommunikationsnetzwerk 33 (z. B. WLAN, Internet) erfolgen, während dem auch ein Identifikationsparameter (z. B. Telefonnummer und/oder Geräte ID Code (Media-Access-Control (MAC) Adresse)) des mobilen Geräts 28 übertragen wird. Je nach Ausgestaltung kann die Steuereinrichtung 8, 12 oder das mobile Gerät 28 auf die Datenbank zugreifen, um die Ortsdaten dieses Beacons 4 zu ermitteln.

Aus Sicht der Steuereinrichtung 8, 12 ist mit dem Zugriff auf die Datenbank somit bekannt, welches mobile Gerät 28 sich in der Nähe des Orts des Beacons 4 aufhält. Bewegt sich der Passagier 30 innerhalb des Gebäudes 2, wiederholt sich der beschriebene Vorgang sobald zwischen dem mobilen Gerät 28 und einem anderen Beacon 4 eine kommunikative Verbindung besteht. Aus Sicht der Steuereinrichtung 8, 12 lässt sich dadurch die Bewegung des mobilen Geräts 28 verfolgen.

In einem Ausführungsbeispiel ist auf dem mobilen Gerät 28 eine Softwareanwendung (App) installiert, die die Kommunikation mit den Beacons 4 und der an das Kommunikationsnetzwerk 33 gekoppelten Steuereinrichtung 8, 12 unterstützt. Autorisierte Personen (z. B. regelmässige Nutzer des Gebäudes 2) können die App auf ihrem mobilen Gerät 28 vorinstallieren. Einem Besucher kann auf seinem mobilen Gerät 28 beim Betreten des Gebäudes 2 die App zum Download angeboten werden.

Fig. 3 illustriert ein Smartphone als ein Beispiel für ein mobiles Gerät 28. Darin sind eine Speichereinrichtung 38 (Memory) und ein Prozessor 40 angeordnet. Da sich diese unter einem Display 42 (Touch Screen) befinden, sind sie von aussen nicht sichtbar und deswegen gestrichelt angedeutet. Mit Hilfe des Displays 42 kann der Passagier 30 Einstellungen und gewünschte Funktionen am mobilen Gerät 28 individuell anpassen. Die Bluetooth Funktion kann beispielsweise aktiviert und deaktiviert werden; Letzteres beispielsweise wenn der Passagier 30 seine Privatsphäre schützen möchte, weil ohne Bluetooth Funktion die Bewegungen im Gebäude 2 nicht verfolgbar sind. Ausserdem kann die oben genannte App vom Passagier 30 aktiviert und deaktiviert werden.

Die App steuert auch das Display 42 an, durch das dem Passagier 30 Informationen mitgeteilt werden können. Die Informationen können in lesbarer Form auf dem Display dargestellt werden, beispielsweise als Text und/oder Symbol. Zusätzlich oder alternativ dazu können die Informationen dem Passagier 30 auch akustisch mitgeteilt werden, so dass beispielsweise auch Personen mit eingeschränkter Sehfähigkeit die Informationen erhalten und entsprechend reagieren können. Im dargestellten Ausführungsbeispiel zeigt das Display 42 verschiedene Zielauswahlfelder 34, 36 an. Die Funktionen der Zielauswahlfelder 34, 36 ist nachfolgend beschrieben.

Im hier beschriebenen Ausführungsbeispiel ist der Passagier 30 ein Angestellter und als solcher als autorisierter Aufzugnutzer in einer Datenbank registriert. Für jeden registrierten Passagier ist in der Datenbank ein Nutzerprofil angelegt, das z. B. Personendaten (z. B. Name, Firma, evtl. körperliche Einschränkung, Identifikationsdaten eines mobilen Gerätes 28 (z. B. ID Code (Media-Access-Control (MAC) Adresse)), Identifikationsdaten eines Mitarbeiterausweises (Badge) mit RFID Technologie oder optischem Code (z. B. Barcode) und/oder personenspezifische Zugangs- und/oder Nutzungsberechtigungen (z. B. Zugang nur an Werktagen zwischen 7:00 Uhr und 18:00 Uhr) enthält. Die Datenbank ist in einem Datenspeicher implementiert, der Teil des Aufzugsystems 1, eines Gebäudemanagementsystems oder einem anderen System (z. B. einem räumlich entfernten Datenspeichersystem) sein kann. Ist die Datenbank ein Teil des Gebäudemanagementsystems oder des räumlich entfernten Datenspeichersystems hat die Steuereinrichtung 8, 12 des Aufzugsystems 1 Zugriff auf die Datenbank, um so z. B. Nutzungs- und Zugangsberechtigungen zu überprüfen, bevor ein Ruf bedient wird. Die Datenbank kann beispielsweise durch einen Gebäudeverwalter oder einen anderen Dienstleister verwaltet werden.

In einem Ausführungsbeispiel detektiert und registriert die Steuereinrichtung 8, 12 jede kommunikative Verbindung zwischen dem mobilen Gerät 28 des Passagiers 30 und einem mittels der Leitung 22 vernetzten Sensor 4. In einer Ausführung mit Beacons 4 detektiert und registriert das mobile Gerät 28 allein und ohne Beteiligung der Steuereinrichtung 8, 12 jede kommunikative Verbindung mit einem der Beacons 4.

Unabhängig davon, welche Einheit (Steuereinrichtung 8, 12 oder mobiles Gerät 28) die einzelnen kommunikativen Verbindungen detektiert, werden die dazugehörigen Verbindungsdaten in einer Speichereinrichtung 15, 38 (s. Fig. 2) gespeichert. In einem Ausführungsbeispiel werden diese Verbindungdaten getrennt von den Nutzerprofilen der oben genannten Datenbank gespeichert. Die in Fig. 1 gezeigte Speichereinrichtung 15 ist über eine Verbindung 17 mit der Steuereinrichtung 8, 12 kommunikativ verbunden und kann Teil des Aufzugsystems 1, eines Gebäudemanagementsystems oder eines räumlich entfernten Datenspeichersystems sein. In Fig. 2 in Verbindung mit Fig. 3 ist die Speichereinrichtung 38 ein Teil des mobilen Geräts 28. Zu den gespeicherten Verbindungsdaten gehören beispielsweise: ID Code des mobilen Geräts 28, das dem Passagier 30 zugeordnet ist, Datum, Anfang und Ende (Uhrzeiten, Dauer) der kommunikativen Verbindung, Kennung und Ort des Sensors 4, oder Signalstärke.

Bewegt sich der Passagier 30 beispielsweise wie in Fig. 1 durch einen Pfeil 29 angedeutet in Richtung des Gemeinschaftsraums 26, kommt es zu Verbindungen mit drei Sensoren 4, zuerst mit "Sensor 1", dann mit "Sensor 2" und schliesslich mit "Sensor 3", Geht der Passagier 30 zu einem späteren Zeitpunkt zurück in sein Büro 24, erfolgen die Verbindungen mit den Sensoren 4 in umgekehrter Reihenfolge. Aus der zeitlichen Reihenfolge der einzelnen kommunikativen Verbindungen kann z. B. der Bewegungsverlauf auf dem Stockwerk ermittelt werden.

Es ist aber auch möglich, dass der Passagier 30 nach Besuch des Gemeinschaftsraums 26 einen Aufzug ruft (angedeutet durch einen Pfeil 31), um in ein bestimmtes Stockwerk zu fahren, beispielsweise zur Mittagszeit auf das Stockwerk, auf dem sich das Restaurant befindet, und zu Büroschluss zur Parketage oder zur Eingangshalle (Lobby). Bei einem solchen Verhalten des Passagiers 30 werden nicht nur die Verbindungsdaten (s. oben) ermittelt, sondern auch Daten, die die Nutzung des Aufzugsystems 1 betreffen. Die Daten zur Nutzung des Aufzugsystems 1 liegen in der Steuereinrichtung 8, 12 vor und werden von dieser zur Weiterverarbeitung zur Verfügung gestellt.

Wiederholen sich diese Vorgänge, z. B. täglich zu bestimmten Zeiten, können daraus ein oder mehrere Verhaltensmuster abgeleitet werden. Eine Gruppe von Verhaltensmustern umfasst Verhaltensmuster, bei denen der Passagier 30 das Aufzugsystem 1 nutzt, um auf ein bestimmtes Zielstockwerk zu fahren. Eine andere Gruppe von Verhaltensmustern umfasst Verhaltensmuster, bei denen sich der Passagier 30 auf dem Stockwerk bewegt, ohne jedoch das Aufzugsystems 1 zu nutzen. Singulär auftretendes Verhalten des Passagiers 30 lässt sich keinem Verhaltensmuster zuordnen. Bei einem solchen Verhalten kann es zu einer oder mehreren kommunikativen Verbindungen kommen (z. B. nahe einem Treppenaufgang), aus denen geschlossen werden kann, dass der Passagier tendenziell keine Nutzung des Aufzugsystems 1 wünscht.

In einem Ausführungsbeispiel liest die Steuereinrichtung 8, 12 die in der Speichereinrichtung 15 gespeicherten Daten (Verbindungsdaten, Daten der Aufzugnutzung) aus und wertet diese statistisch aus. Durch die Auswertung kann beispielsweise erkannt werden, ob das Verhalten eines Passagiers 30 ein bestimmtes Verhaltensmuster aufweist (z. B. der Passagier 30 geht jeden Tag gegen 8:00 Uhr vom Büro 24 zum Gemeinschaftsraum 26 und fährt danach gegen 8:15 Uhr zum Stockwerk der Geschäftsführung). Ein erkanntes Verhaltensmuster wird als solches identifiziert und gespeichert. Die statistische Auswertung kann beispielsweise entsprechend einem festgelegten Zeitplan (z. B. einmal pro Tag) oder nach jeder Änderung eines Datensatzes erfolgen. Eine Änderung des Datensatzes ergibt sich nach jeder detektierten kommunikativen Verbindung, wenn die sich daraus ergebenden Verbindungsdaten gespeichert wurden.

Für die statistische Auswertung hat die Steuereinrichtung 8, 12 einen Prozessor, der die Daten mit einem entsprechenden Algorithmus auswertet. Der Algorithmus ist in einem Ausführungsbeispiel als Statistik- und Analyse-Software implementiert, entweder als individuell entwickelte Softwareanwendung oder als kommerziell erhältliches Softwareprodukt, z. B. die Statistiksoftware IBM SPSS Statistics.

Die durch die Auswertung aufbereiteten Daten, insbesondere das oder die erkannten Verhaltensmuster (Bewegungs- und Nutzungsmuster) werden je nach Ausgestaltung in einer Speichereinrichtung gespeichert. Wie oben ausgeführt, kann die Speichereinrichtung Teil des Aufzugsystems 1 (Speichereinrichtung 15), des Gebäudemanagementsystems, einem räumlich entfernten Datenspeichersystems oder des mobilen Geräts 28 (Speichereinrichtung 38) sein. Aus Datenschutzgründen, insbesondere zum Schutz der Privatsphäre des Passagiers 30 kann es gewünscht oder erforderlich sein, dass personenbezogene Daten unter der Kontrolle des Passagiers 30 bleiben und beispielsweise ausschliesslich in der Speichereinrichtung 38 des passagiereigenen mobilen Geräts 28 gespeichert werden. Die Steuereinrichtung 8, 12 kann auf diese Daten zugreifen, um diese zu verarbeiten und je nach erkanntem Verhaltensmuster einen Zielruf zu erzeugen; eine Speicherung der Daten ausserhalb des mobilen Geräts 28 erfolgt dabei jedoch nicht.

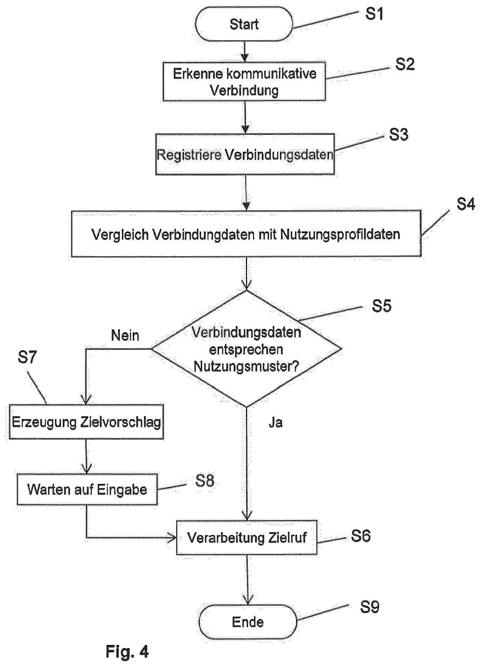

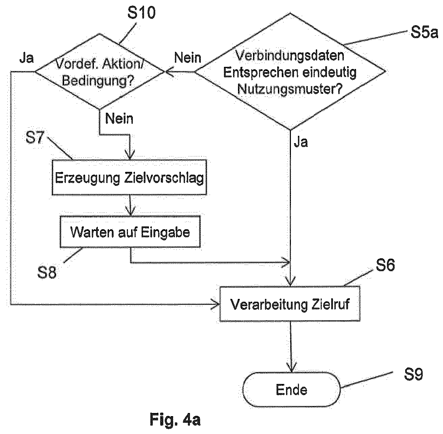

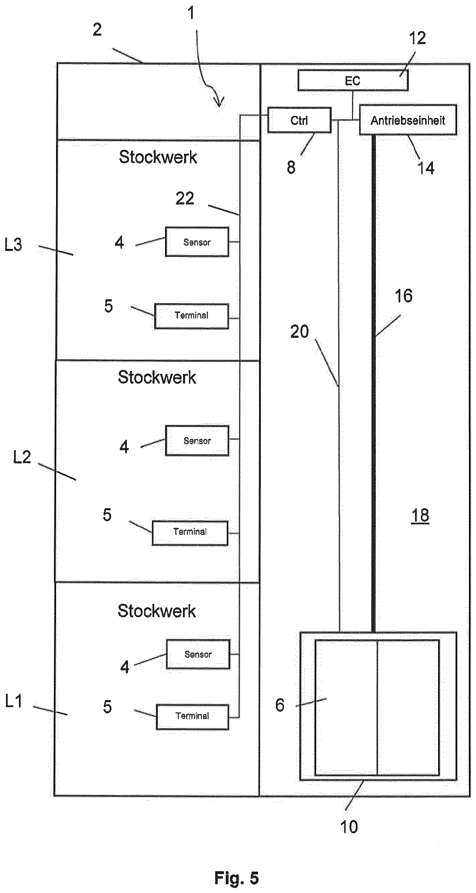

Mit dem Verständnis der in Verbindung mit Fig. 1 - Fig. 3 beschriebenen prinzipiellen Struktur und Funktionalitäten des Gebäudes 2 und des Aufzugsystems 1, erfolgt im Folgenden eine Beschreibung von Ausführungsbeispielen eines Verfahrens zum Betreiben des Aufzugsystems 1, insbesondere eines Verfahrens zum Erzeugen eines Zielrufes, in Verbindung mit Fig. 4. Weitere strukturelle Details des Aufzugsystems 1 sind unten in Verbindung mit Fig. 5 beschrieben.

Fig. 4 zeigt ein beispielhaftes Ablaufdiagramm eines Verfahrens zum Erzeugen eines Zielrufes im Aufzugsystem 1. Dabei ist erneut angenommen, dass das mobile Gerät 28 ein Smartphone ist, das der Passagier 30 gemäss der in Fig. 1 beispielhaft gezeigten Situation auf einem Stockwerk des Gebäudes 2 bei sich trägt, und dass eine erste kommunikative Verbindung (d. h. das Pairing) zwischen dem Smartphone und den Sensoren 4 des Sensorsystems bereits erfolgte. Wie oben ausgeführt, ist ein solches Pairing nicht erforderlich. Es ist ausserdem angenommen, dass die in der Speichereinrichtung 15, 38 gespeicherten Verbindungs- und Nutzungsdaten ausgewertet und evtl. darin enthaltene Verhaltensmuster erkannt und als solche identifiziert gespeichert wurden. Welche Speichereinrichtung 15, 38 verwendet wird, hängt z. B. von oben genannten Präferenzen und Vorgaben bzgl. Datenschutz ab. Dementsprechend können ein oder mehrere Schritte des Verfahrens in der Steuereinrichtung 8, 12 oder im mobilen Gerät 28 ausgeführt werden. Das Verfahren gemäss Fig. 3 beginnt in einem Schritt S1 und endet in einem Schritt S9.

In einem Schritt S2 wird eine kommunikative Verbindung zwischen dem Sensor 4 und dem mobilen Gerät 28 erkannt. Handelt es sich um Sensoren 4, die über die in Fig. 1 gezeigte Leitung 22 miteinander vernetzt sind, empfängt die Steuereinrichtung 8, 12 ein Signal von dem Sensor 4, der an der kommunikativen Verbindung beteiligt ist. Damit ist auch bekannt, welcher Sensor 4 beteiligt ist und an welchem Ort sich der Sensor 4 befindet. Handelt es sich bei dem Sensor 4 um einen Bluetooth Beacon, liest das mobile Gerät 28 die ID (Kennung) dieses Beacons während der kommunikativen Verbindung aus. Dazu braucht es nicht unbedingt ein Pairing. Die ID (Kennung) wird dann verwendet, um in der Datenbank den Ort des Beacons mit dieser ID (Kennung) zu identifizieren. Je nach Ausgestaltung wird mit dem Lesen der ID oder mit dem Zugriff auf die Datenbank das Bestehen einer kommunikativen Verbindung erkannt.

In einem Schritt S3 werden Verbindungsdaten der kommunikativen Verbindung zwischen dem Sensor 4 und dem mobilen Gerät 28 registriert. Bei jeder kommunikativen Verbindung werden Verbindungsdaten erzeugt, durch die zum Beispiel festgestellt werden kann, welches mobile Gerät 28 und welcher Sensor 4 beteiligt sind, wo die kommunikative Verbindung stattfindet (Stockwerk, Ort auf dem Stockwerk) und wie lange sie dauert. In der in Fig. 1 gezeigten Situation kommt es zu mehreren kommunikativen Verbindungen, während der Passagier 30 vom Büro 24 zum Gemeinschaftsraum 26 geht. Danach kann der Passagier 30 einen Aufzug rufen, beispielsweise mittels dem Stockwerkterminal 5 oder dem mobilen Gerät 28. Geht der Passagier 30 diesen Weg regelmässig zu einer bestimmten Zeit, kann dies einem beispielhaften Verhaltensmuster entsprechen.

In einem Schritt S4 werden die Verbindungsdaten aus Schritt S3 mit Daten verglichen, die in der Speichereinrichtung 15, 38 gespeichert sind. Durch den Vergleich kann erkannt werden, ob und mit welcher Wahrscheinlichkeit (in Prozent) die Verbindungsdaten einem Verhaltensmuster entsprechen.

Wird in einem Schritt S5 festgestellt, dass die Verbindungsdaten einem bekannten Verhaltensmuster entsprechen, gemäss dem der Passagier 30 mit einem Aufzug auf ein Zielstockwerk fahren möchte, wird daraus der entsprechende Zielruf abgeleitet. Die Verbindungsdaten entsprechen dann einem bekannten Verhaltensmuster, wenn die in Schritt S4 bestimmte Wahrscheinlichkeit grösser als ein festgelegter Grenzwert (z. B. 90%) ist. Das Zielstockwerk ist in diesem Verhaltensmuster festgelegt, und das Einsteigestockwerk ergibt sich aus dem Stockwerk, auf dem der Sensor 4 angeordnet ist. Die Definition des Zielrufes erfolgt dabei automatisch und ohne weiteres Zutun des Passagiers 30. Das Verfahren schreitet dann entlang dem Ja-Zweig zu einem Schritt S6.

Im Schritt S6 wird der Zielruf der Steuereinrichtung 8, 12 zugeführt und durch sie verarbeitet. Die Steuereinrichtung 8, 12 verarbeitet diesen Zielruf unter Verwendung eines Zuteilungsalgorithmus und teilt dem Zielruf eine Aufzugkabine 10 zu, die den Zielruf bedienen soll. Mit der Zuteilung der Aufzugkabine 10 endet das Verfahren im Schritt S9.

Wird im Schritt S5 dagegen festgestellt, dass die Verbindungsdaten keinem bekannten Verhaltensmuster entsprechen, schreitet das Verfahren im gezeigten Ausführungsbeispiel entlang dem Nein-Zweig zu einem Schritt S7. Im Schritt S7 wird dann mindestens ein Zielvorschlag erzeugt, der beispielsweise einer besten Übereinstimmung zwischen den (momentanen) Verbindungsdaten und einem gespeicherten Verhaltensmuster entspricht. Je nachdem, ob ein oder mehrere Zielvorschläge erzeugt werden, können die Zielvorschläge in einer Rangliste angeordnet auf dem Display 42 des Smartphones angezeigt werden. In Fig. 2 sind beispielhaft drei Zielvorschläge (Destination A, Destination B, Destination C) den Zielauswahlfeldern 34 zugeordnet, aus denen der Passagier 30 einen Vorschlag auswählen kann.

In einem Ausführungsbeispiel ist auf dem mobilen Gerät 28 eine Softwareanwendung (App) installiert, die das Display 42 entsprechend steuert. Je nach Ausgestaltung kann die Softwareanwendung die Zielvorschläge selbst ermitteln (d. h. die Auswertung der Verbindungsdaten erfolgt im mobilen Gerät 28) oder entsprechende Steuerbefehle von der Steuereinrichtung 8, 12 empfangen um daraufhin das Display 42 zu steuern.

Erfolgt in einem Schritt S8 eine Eingabe, in dem der Passagier 30 eines der Zielauswahlfelder 34 berührt, wird ein der Eingabe entsprechender Zielruf definiert. Die Verarbeitung des Zielrufes erfolgt wie oben in Verbindung mit Schritt S6 beschrieben.

Möchte der Passagier 30 zu keinem der vorgeschlagenen Ziele fahren, kann mittels dem Zielauswahlfeld 36 (Other) die Displayanzeige geändert werden, beispielsweise kann eine Zahlentastatur angezeigt werden, mit der der Passagier 30 das gewünschte Zielstockwerk direkt eingeben kann. Es kann aber auch eine Nachricht angezeigt werden, die den Passagier 30 auffordert, das Zielstockwerk am in Fig. 1 gezeigten Stockwerkterminal 5 einzugeben.

Im beschriebenen Ausführungsbeispiel entspricht der im Schritt S7 erzeugte Zielvorschlag einer besten Übereinstimmung zwischen den (momentanen) Verbindungsdaten und einem gespeicherten Verhaltensmuster. In einem anderen Ausführungsbeispiel kann der Passagier 30 gewünschte Ziele (Zielwünsche) selbst vordefinieren. Dazu kann in einem Ausführungsbeispiel die oben genannte und auf dem mobilen Gerät 28 installierte Softwareanwendung (App) verwendet werden. Der Passagier 30 legt mit deren Hilfe das oder die gewünschten Ziele und dazugehörige Transportbedingungen fest. Diese Transportbedingungen umfassen beispielsweise Kalendertage, Uhrzeiten und/oder Transportparameter. Der Passagier 30 kann somit beispielsweise festlegen, dass eine Aufzugfahrt zum 5. Stockwerk gewünscht ist, wenn es an einem Werktag (Mo. - Fr.) morgens zwischen 7.00 Uhr und 9.00 Uhr zu einer kommunikativen Verbindung zwischen einem Sensor 4 in der Eingangshalle und dem mobilen Gerät 28 kommt. Zu den gennannten Zeiten entspricht das einem Fahrtwunsch von der Eingangshalle auf das 5. Stockwerk. Zu anderen Zeiten kann ein anderes Stockwerk als Ziel festgelegt werden. In entsprechender Weise können mehrere Ziele definiert werden. Ist die Transportbedingung erfüllt, wird ein entsprechender Zielruf automatisch erzeugt.

Um den Passagier 30 bei der Festlegung der Ziele und Transportbedingungen zu unterstützen, zeigt die Softwareanwendung auf dem Display 42 ein graphisches User Interface an, das z. B. wie folgt strukturiert sein kann:

| < ZURÜCK | | SPEICHERN > |
|---|---|---|
| Von | | Lobby > |
| Nach | | 5. Stockwerk > |
| Zeitfenster | Von: 07:00 > | Bis: 09:00 > |
| Tage | Von: Montag > | Bis: Freitag > |

Durch Drücken der Eingabe- und Auswahlfelder (dargestellt durch das Symbol ">") kann der Passagier 30 das Startstockwerk, das Zielstockwerk, das Zeitfenster und die Tage, an denen die Transportbedingung Gültigkeit haben soll, festlegen. Sind alle Eingaben getätigt, kann der Passagier 30 die Funktion des selbstdefinierten Ziels aktivieren oder deaktivieren. Der Passagier 30 kann diese Einstellungen somit in einer Weise vornehmen, wie sie z. B. aus der Einstellung einer Weckzeit (Alarm) und deren Aktivierung bzw. Deaktivierung bei einem Smartphone bekannt ist.

Der Fachmann erkennt, dass in analoger Weise auch weitere Bedingungen festgelegt werden können. So kann beispielsweise eine Bedingung definieren, dass eine bestimmte Tür entriegelt wird, wenn es zu einem festgelegten Tag und innerhalb eines festgelegten Zeitfensters zu einer kommunikativen Verbindung zwischen einem Sensor 4 in der Eingangshalle und dem mobilen Gerät 28 kommt. An einem anderen Tag und/oder ausserhalb des Zeitfensters bleibt die Tür verriegelt. Die Vordefinition einer solchen Türbedingung erleichtert es dem Passagier 30, sich innerhalb des Gebäudes 2 zu bewegen.

Der Fachmann erkennt ausserdem, dass die hier beschriebene Technologie in anderen Ausführungsbeispielen so modifiziert werden kann, dass zusätzlich zum oder anstelle des Erzeugens eines Zielrufes Befehle zum Ansteuern einer Türverriegelung (z. B. Türschloss) des Gebäudes 2 oder eines Raumes erzeugt werden können. Auch in diesen Fall erkennt das System mittels der Sensoren 4, wo sich der Passagier 30 befindet und wie er sich im Gebäude 2 bewegt, und legt entsprechend Verhaltensmuster an. Das System erkennt damit, ob der Passagier 30 von einem Raum in den nächsten möchte, und entriegelt die entsprechenden Türen.

In einem Ausführungsbeispiel führt die Softwareanwendung eine Plausibilitätsprüfung durch, die die definierten Ziele auf mögliche Konflikte prüft. Ein beispielhafter Konflikt könnte darin bestehen, dass der Passagier 30 versucht, für das Zeitfenster zwischen 7.00 Uhr und 9.00 Uhr mehrere unterschiedliche Ziele festzulegen. In einem solchen Fall wäre nicht klar, welches Ziel das Aufzugsystem 1 zu bedienen hätte. Die Softwareanwendung kann den Passagier 30 auf einen solchen Konflikt hinweisen und z. B. auffordern, das Zeitfenster zu ändern.

Je nach Ausgestaltung und vorhandenen Leistungsmerkmalen der Softwareanwendung kann es die Softwareanwendung dem Passagier 30 erlauben, Abwesenheiten (z. B. "Ferien von/bis") und/oder zusätzliche Bedingungen vorzudefinieren (z. B. "Wenn allein, dann Aktion A" oder "Wenn in Begleitung eines Kollegen, dann Aktion B").

Die Möglichkeit, gewünschte Ziele und Bedingungen durch den Passagier 30 vordefinieren zu lassen, kann auch dann nützlich sein, wenn noch keine ausreichende Datenbasis vorhanden ist, um durch statistische Auswertungen Bewegungsmuster zu erkennen. Hat der Passagier 30 Ziele und Bedingungen festgelegt, werden die Bedienung des Aufzugsystems 1 und das Fortbewegen innerhalb des Gebäudes 2 bereits komfortabler, auch wenn noch keine Bewegungsmuster erkannt wurden.

Neben den genannten Bedingungen kann der Passagier 30 mit Hilfe der Softwareanwendung einzelne Grundeinstellungen festlegen. Dazu gehören beispielsweise das Stockwerk, auf dem sich das Büro des Passagiers 30 befindet, oder das Parkdeck, auf dem der Passagier 30 üblicherweise sein Fahrzeug parkt. Eine weitere Grundeinstellung betrifft die statistische Auswertung der Verbindungsdaten. Der Passagier 30 kann beispielsweise den Grenzwert für die Wahrscheinlichkeit festlegen, die in Schritt S4 bestimmt wird.

Das Sensorsystem mit seinen im Gebäude 2 verteilten Sensoren 4 dient wie oben ausgeführt dazu, die Aufenthaltsorte des Passagiers 30 innerhalb des Gebäudes 2 zu erkennen, woraus die genannten Bewegungsmuster als Funktion der Zeit abgeleitet werden. Dadurch wird die Bedienung des Aufzugsystems 1 erleichtert. Es kann jedoch sein, dass der Passagier 30 diese Funktionalität und das damit verbundene "Tracking" seiner Bewegungen nicht wünscht. In einem solchen Fall kann der Passagier 30 die Tracking-Funktionalität mittels der Softwareanwendung deaktivieren, beispielsweise durch Eingabe eines Deaktivierungsbefehls. Dadurch unterbleibt mindestens die statistische Auswertung; je nach Ausgestaltung können auch das Ableiten von Bewegungsmustern und das automatische Erzeugen eines Zielrufs unterbleiben. Die Bluetooth Funktion des mobilen Geräts 28 wird dabei nicht deaktiviert, so dass auch weiterhin kommunikative Verbindungen zwischen dem mobilen Gerät 28 und den Sensoren 4 zu Stande kommen. Hat der Passagier 30 wie oben beschrieben Ziele und Bedingungen festgelegt, wird die Bedienung des Aufzugsystems 1 jedoch trotz der Deaktivierung der Tracking-Funktionalität komfortabler, denn ist z. B. eine Transportbedingung erfüllt, wird ein Zielruf automatisch erzeugt.

In einem Ausführungsbeispiel erzeugt das System eine Nachricht für den Passagier 30, die dem Passagier 30 mit Hilfe des mobilen Geräts 28 lesbar und/oder hörbar mitgeteilt wird. Das System erzeugt diese Nachricht, wenn es nach einer Aufzugfahrt oder einer anderen räumlichen Bewegung im Gebäude 2, oder mehreren derartigen Aktivitäten, eine gewisse Hypothese bezüglich eines Nutzungsmusters hat. Die Nachricht kann den Passagier 30 beispielsweise fragen, ob dieses Nutzungsmuster als solches gespeichert werden soll oder ob sich das Nutzungsmuster zu bestimmten Tagen und Zeiten wiederholt.

Wie oben ausgeführt, erzeugt das System in einem Ausführungsbeispiel automatisch einen Zielruf, ohne Zutun des Passagiers 30. Damit der Passagier 30 Kenntnis darüber und den zugeteilten Aufzug erlangen kann, informiert das System den Passagier 30 mit Hilfe des mobilen Geräts 28, beispielsweise über den zugeteilten Aufzug. Da nicht bekannt ist, wann das geschehen wird, kann das mobile Gerät 28 in einem gesperrten oder entsperrten Zustand sein. Im entsperrten Zustand erscheint das graphische User Interface auf dem Display 42 und zeigt die Nummer oder den Buchstaben des zugeteilten Aufzugs an. Dies kann in Verbindung mit einer hörbaren Mitteilung geschehen. Im gesperrten Zustand zeigt das Display 42 gemäss einem Ausführungsbeispiel eine Nachricht an, die auch als Sprachmitteilung ausgegeben wird. Trägt der Passagier 30 das mobile Gerät 28 beispielsweise nicht sichtbar in einer Kleidungstasche, kann die Sprachmitteilung dennoch gehört werden.

Unter Berücksichtigung der vorhergehend beschriebenen Ausführungsbeispiele bzgl. vordefinierter Aktionen, Bedingungen, Grundeinstellungen und unerwünschter Tracking-Funktionalität kann das in Fig. 4 illustrierte Verfahren modifiziert werden. Fig. 4a zeigt eine beispielhafte Darstellung einer Variante des in Fig. 4 beschriebenen Verfahrens. Um Wiederholungen zu vermeiden, sind die Schritte S1 - S4 in Fig. 4a nicht dargestellt; es versteht sich jedoch, dass diese ausgeführt werden. In Fig. 4a ist ausserdem ein Schritt S5a gezeigt, der als modifizierter Schritt S5 der Fig. 4 betrachtet werden kann.

Im Schritt S5a wird geprüft, ob die Verbindungsdaten eindeutig einem bekannten Verhaltensmuster entsprechen. Die Verbindungsdaten entsprechen dann eindeutig einem bekannten Verhaltensmuster, wenn die in Schritt S4 bestimmte Wahrscheinlichkeit grösser als der beispielsweise durch den Passagier 30 festgelegte Grenzwert ist. Ist dies der Fall, schreitet das Verfahren entlang dem Ja-Zweig zum Schritt S6, wie oben beschrieben. Ist dies nicht der Fall, weil beispielsweise die Datenbasis für eine statistische Auswertung nicht ausreichend ist oder weil die Tracking-Funktionalität deaktiviert ist, schreitet das Verfahren entlang dem Nein-Zweig zu einem Schritt S10.

Im Schritt S10 wird geprüft, ob der Passagier 30 Aktionen und/oder Bedingungen mittels des mobilen Geräts 28 vordefiniert hat. Es kann beispielsweise definiert sein, dass der Passagier 30 immer in das 5. Stockwerk fahren möchte, wenn das Sensorsystem das mobile Gerät 28 an einem Montag in der Lobby erkennt, andernfalls in das 10. Stockwerk. Weitere Möglichkeiten und deren Definitionen mit Hilfe der Softwareanwendung sind oben aufgeführt.

Liegen im Schritt S10 vordefinierte Aktionen und Bedingungen vor und treffen diese auf die momentanen Verbindungsdaten zu, schreitet das Verfahren entlang dem Ja-Zweig zum Schritt S6, in dem der entsprechende Zielruf verarbeitet wird. Im anderen Fall, d. h. es liegen keine vordefinierten Aktionen und Bedingungen vor oder diese treffen auf die momentanen Verbindungsdaten nicht zu, schreitet das Verfahren entlang dem Nein-Zweig zum Schritt S7, in dem beispielsweise ein oder mehrere Zielvorschläge erzeugt werden.

Die in Fig. 4a dargestellte Variante berücksichtigt somit, dass die genannten Vordefinitionen durch den Passagier 30 die statistische Auswertung der Verbindungsdaten und das Erkennen eines Verhaltensmusters verbessern (z. B. bei zu geringer Datenbasis) oder ganz oder teilweise ersetzen können (z. B. bei deaktivierter Tracking-Funktionalität). Bei zu geringer Datenbasis kann beispielsweise ein definiertes Zeitfenster die statistische Auswertung verbessern. Eine statistische Auswertung kann dagegen durch eine vordefinierte Aktion ersetzt werden.

Im Folgenden werden weitere Komponenten und Funktionen des Aufzugsystems 1 in Verbindung mit Fig. 5 erläutert, soweit sie für ein Verständnis der hier beschriebenen Technologie hilfreich erscheinen. In einer Seitenansicht des schematisch gezeigten Gebäudes 2 zeigt Fig. 1 eine Darstellung eines Ausführungsbeispiels des Aufzugsystems 1. Das Gebäude 2 hat mehrere Stockwerke L1, L2, L3, die durch das Aufzugsystem 1 bedient werden, d.h., ein Passagier kann von dem Aufzugsystem 1 von einem Einsteigestockwerk auf ein Zielstockwerk befördert werden. Je nach Gebäude 2 kann das Aufzugsystem 1 unterschiedlich ausgestaltet sein, beispielsweise als Traktionsaufzug mit Seilen oder Riemen, als hydraulischer Aufzug, als Aufzug mit Mehrfachkabinen, oder als Gruppe von mehreren Aufzügen (z. B. wie in Fig. 1 gezeigt eine Gruppe von drei Aufzügen, wobei jeder eine Aufzugkabine 10 (pro Schacht) hat. Im gezeigten Ausführungsbeispiel hat das Aufzugsystem 1 eine in einem Aufzugschacht 18 verfahrbare Aufzugkabine 10, die über ein Tragmittel 16 (Seile oder Riemen) mit einer Antriebseinheit (Drive) 14 verbunden ist und an dieser Antriebseinheit 14 aufgehängt ist. Dabei kann es sich um einen Traktionsaufzug handeln, wobei weitere Details, wie zum Beispiel ein Gegengewicht und Führungsschienen in Fig. 1 nicht gezeigt sind. Die Aufzugsteuerung (EC) 12 ist mit der Antriebseinheit 14 verbunden und steuert die Antriebseinheit 14 an, um die Aufzugkabine 10 im Schacht 18 zu verfahren. Die Funktion eines Traktionsaufzugs und die Aufgaben einer Aufzugsteuerung 12 sind dem Fachmann allgemein bekannt.

Das in Fig. 4 gezeigte Aufzugsystem 1 ist mit einer Zielrufsteuerung ausgestattet, so dass beispielsweise der im Schritt S6 der Fig. 3 erzeugte Zielruf in bekannter Weise verarbeitet werden kann. Die Funktion der Zielrufsteuerung ist im gezeigten Ausführungsbeispiel in der Steuervorrichtung (Ctrl) 8 implementiert, sie kann aber auch ganz oder teilweise in der Aufzugsteuerung 12 implementiert sein. Die Steuervorrichtung 8 und die Aufzugsteuerung 12 können zu einer Steuereinrichtung (8, 12) zusammengefasst werden.

Obwohl die Steuereinrichtung (8, 12) gemäss einiger hier beschriebenen Ausführungsbeispielen automatisch einen personenspezifischen Zielruf erzeugen kann, ist in einem Ausführungsbeispiel eine Anzahl von Stockwerkterminals 5 als Eingabeterminals zur Eingabe von Zielrufen vorgesehen. Diese Stockwerkterminals 5 erlauben es beispielsweise einem nicht registrierten Passagier oder einem Besucher ohne einem mobilen Gerät einen Zielruf einzugeben; sie erlauben es aber auch einem registrierten Passagier 30 einen vom normalen Nutzungsverhalten abweichenden Zielruf einzugeben, z. B. auch dann, wenn keiner der Zielvorschläge dem momentanen Fahrtwunsch des Passagiers 30 entspricht. Wie oben ausgeführt, kann der Passagier 30 dazu auch das mobile Gerät 28 verwenden. Die Stockwerkterminals 5 sind mit der Steuervorrichtung 8 über die Leitung 22 kommunikativ verbunden. In dem gezeigten Ausführungsbeispiel hat das Gebäude 2 drei Stockwerke L1, L2, L3 und auf jedem Stockwerk ist ein Stockwerkterminal 5 vorhanden. Es können aber auch nur zwei oder mehr als drei Stockwerke vorhanden sein; es ist auch möglich, dass auf einem Stockwerk L1, L2, L3 mehr als ein Stockwerkterminal 5 vorhanden ist.

Die Steuervorrichtung 8 ist wie oben beschrieben mit der Aufzugsteuerung 12 kommunikativ verbunden. Unter einer kommunikativen Verbindung ist in dieser Beschreibung eine direkte oder indirekte Verbindung zu verstehen, die eine unidirektionale oder bidirektionale Kommunikation zwischen zwei Einheiten ermöglicht. Dabei werden in an sich bekannter Art und Weise Datensignale und/oder Steuersignale übertragen. Eine solche Verbindung kann durch ein elektrisches Leitungssystem (entweder als System von Punkt-zu-Punkt Verbindungen oder als Bussystem, wobei die am Bussystem angeschlossenen Einheiten adressierbar sind), ein Funksystem oder eine Kombination aus einem Funksystem und einem Leitungssystem erfolgen. In Fig. 5 ist die kommunikative Verbindung beispielhaft durch Leitungen 20, 22 dargestellt, wobei die Leitung 20 zwischen der Steuervorrichtung 8 und der Kabine 10 besteht und die Leitung 22 die Stockwerkterminals 5 mit der Steuervorrichtung 8 verbindet. In einem Ausführungsbeispiel kann die Leitung 22 ein Bussystem sein, an das die Stockwerkterminals 5 angeschlossen sind. In entsprechender Weise kann auch die Leitung 20 ein Bussystem sein.

In einem anderen Ausführungsbeispiel kann mindestens ein Stockwerkterminal 5 über ein Funksystem mit der Steuervorrichtung 8 kommunikativ verbunden sein. In einem weiteren Ausführungsbeispiel kann das mobile elektronische Gerät 28 (z. B. Mobiltelefon, Smartphone, Smartwatch, Tablet PC) anstelle eines Stockwerkterminals 5 zur Eingabe eines Zielrufes verwendet werden. Das in Fig. 3 gezeigte Display 42 des mobilen Geräts 28 kann auch eine Mitteilung (z. B. "Aufzug A") über den diesem Zielruf zugeteilten Aufzug zu erhalten. Für eine drahtlose Kommunikation mit dem Aufzugsystem 1 hat das mobile elektronische Gerät ein Funkmodul, beispielsweise ein Bluetooth-, ein RFID- und/oder ein NFC-Modul.

Der Fachmann erkennt, dass die Steuervorrichtung 8 bzw. ihre Funktionalität auch Teil der Aufzugsteuerung 12 oder eines Stockwerkterminals 5 sein kann. In einem solchen Fall könnte beispielsweise die separate Darstellung der Steuervorrichtung 8 in Fig. 5 entfallen. Ist die Steuervorrichtung 8 bzw. ihre Funktionalität in die Aufzugsteuerung 12 integriert, stellt die Aufzugsteuerung 12 die Steuereinrichtung dar. Je nach Ausgestaltung ändert sich daher auch die Implementierung der kommunikativen Verbindung. Fig. 5 ist somit als prinzipielle Darstellung eines Ausführungsbeispiels zu verstehen.

In einem Ausführungsbeispiel ist auf jedem Stockwerk L1, L2, L3 ein Stockwerkterminal 5 angeordnet, beispielsweise im Bereich des Zugangs zu einer Aufzugkabine 10. In einem Ausführungsbeispiel umfasst das Stockwerkterminal 5 eine Tastatur oder einen berührungsempfindlichen Bildschirm (Touchscreen), so dass ein Passagier ein Zielstockwerk eingeben kann. In einem anderen Ausführungsbeispiel umfasst das Stockwerkterminal 5 eine Vorrichtung zum Erkennen eines Berechtigungsparameters, der einem Passagier zugeordnet ist. In einem Ausführungsbeispiel ist diese Vorrichtung ein Lesegerät für einen von einem Passagier mitgeführten Informationsträger. Präsentiert der Passagier den Informationsträger dem Lesegerät, liest das Lesegerät Information vom Informationsträger, die beispielsweise dazu dient, eine Bedienberechtigung zu erkennen. Nur wenn der Passagier dazu berechtigt ist, das Eingabeterminal 5 zu bedienen, kann der Passagier eine Eingabe machen. Je nach Ausgestaltung kann mit der gelesenen Information ohne weiteres Zutun des Passagiers auch ein Zielruf ausgelöst werden.

In einem Ausführungsbeispiel ist der Informationsträger kartenähnlich ausgestaltet, beispielsweise in Form einer Kreditkarte oder eines Mitarbeiterausweises. Je nach Ausgestaltung befindet sich im oder auf dem Informationsträger ein von aussen kontaktierbarer Speicherchip, ein RFID Transponder in Verbindung mit einem Speicherchip oder ein von aussen optisch lesbarer Code, z. B. ein QR Code oder ein Barcode. Alternativ dazu kann die Funktionalität des Informationsträgers auch auf einem tragbaren elektronischen Gerät (z. B. Mobilfunktelefon oder Smartphone) realisiert sein. Auf den Displays solcher Geräte können beispielsweise QR Codes, Barcodes oder Farbmustercodes dargestellt werden. Solche Geräte ermöglichen auch eine Funkverbindung mit anderen elektronischen Geräten, beispielsweise über bekannte Funktechnologien wie beispielsweise Bluetooth oder NFC. Das Lesegerät des Stockwerkterminals 5 ist selbstverständlich kompatibel mit der verwendeten Technologie des Informationsträgers. Der Fachmann erkennt ausserdem, dass das Lesegerät auch für mehr als eine Technologie konfiguriert sein kann. In einem anderen Ausführungsbeispiel kann die Berechtigung zur Eingabe auch dadurch erfolgen, dass der Passagier mit einem Schlüssel das Stockwerkterminal 5 für eine Eingabe freischaltet.

## Patentansprüche

1. Verfahren zum Erzeugen einer Aktion in einem Gebäude (2) mit mindestens einer Tür und einem Aufzugsystem (1) mit einer Aufzugkabine (10), die zwischen Stockwerken (L1, L2, L3) des Gebäudes (2) verfahrbar ist, umfassend:
Erkennen einer kommunikativen Verbindung zwischen einem Sensor (4) eines eine Vielzahl von Sensoren (4) umfassenden Sensorsystems und einem mobilen elektronischen Gerät (28) eines Passagiers (30), wobei das elektronische Gerät (28) ein Mobiltelefon, ein Smartphone, eine Smartwatch oder ein Tablet PC ist;
Registrieren von Verbindungsdaten der kommunikativen Verbindung, wobei die Verbindungsdaten einen Ort des Sensors (4), der an der kommunikativen Verbindung beteiligt ist, eine Kennung des mobilen Geräts (28) und Zeitdaten der kommunikativen Verbindung umfassen;
Vergleichen der Verbindungsdaten mit Daten, die in einer Speichereinrichtung (15, 38) gespeichert sind, um zu erkennen, ob die Verbindungsdaten einem gespeicherten Verhaltensmuster entsprechen;
wenn die Verbindungsdaten einem gespeicherten Verhaltensmuster entsprechen, Erzeugen der Aktion; und
Ansteuern des mobilen elektronischen Geräts (28), um den Passagier (30) mittels einer lesbaren und/oder hörbaren Mitteilung über die Aktion zu informieren,
wobei eine Serie von aufeinanderfolgenden kommunikativen Verbindungen erkannt wird, wobei das Registrieren der kommunikativen Verbindungen das Verhaltensmuster des mobilen Geräts (28) ergibt.

2. Verfahren nach Anspruch 1, bei dem die Aktion einen Zielruf umfasst, der erzeugt wird, wenn die Verbindungsdaten einem gespeicherten Verhaltensmuster mit einer Nutzung des Aufzugsystems (1) entsprechen, wobei der Zielruf ein Einsteigestockwerk und ein Zielstockwerk definiert, und wobei das Zielstockwerk in diesem Verhaltensmuster festgelegt ist.

3. Verfahren nach Anspruch 1, bei dem die Aktion einen Entriegelungsbefehl für eine Tür des Gebäudes (2) umfasst, der erzeugt wird, wenn die Verbindungsdaten einem gespeicherten Verhaltensmuster entsprechen, das ein Entriegeln einer Tür erfordert.

4. Verfahren nach einem der vorhergehenden Ansprüche, ausserdem umfassend Anzeigen von mindestens einem Zielvorschlag, wenn die Verbindungsdaten nicht eindeutig einem gespeicherten Verhaltensmuster entsprechen, wobei der Zielvorschlag einer besten Übereinstimmung zwischen den Verbindungsdaten und einem gespeicherten Verhaltensmuster entspricht.

5. Verfahren nach einem der vorhergehenden Ansprüche, bei dem aus einer oder mehreren kommunikativen Verbindungen geschlossen wird, dass der Passagier (30) tendenziell keine Nutzung des Aufzugsystems (1) wünscht.

6. Verfahren nach einem der vorhergehenden Ansprüche, ausserdem umfassend Lesen der Speichereinrichtung (15, 38) durch eine Steuereinrichtung (8, 12) des Aufzugsystems (1), wobei die Steuereinrichtung (8, 12) den genannten Vergleich und die genannte Erzeugung der Aktion durchführt.

7. Verfahren nach einem der Ansprüche 1 bis 5, ausserdem umfassend Lesen der Speichereinrichtung (38) durch eine Prozessoreinrichtung (40) des mobilen Geräts (28), wobei die Prozessoreinrichtung (40) den Vergleich und die Erzeugung der Aktion durchführt.

8. Verfahren nach einem der vorhergehenden Ansprüche, ausserdem umfassend Erkennen eines Deaktivierungsbefehls, wodurch das Registrieren der kommunikativen Verbindung zwischen dem Sensor (4) und dem mobilen Gerät (28) deaktiviert wird.

9. Verfahren nach einem der vorhergehenden Ansprüche, ausserdem umfassend Empfangen am mobilen Gerät (28) mindestens eines durch den Passagier (30) definierten Zielwunsches, der ein Fahrziel und eine dazugehörige Transportbedingung umfasst, und, wenn die Transportbedingung erfüllt ist, Erzeugen eines entsprechenden Zielrufes.

10. Verfahren nach Anspruch 9, ausserdem umfassend Durchführen einer Plausibilitätsprüfung, um Konflikte zwischen mehreren empfangenen Zielwünschen zu erkennen.

11. Verfahren nach einem der vorhergehenden Ansprüche, bei dem die Sensoren (4) mit Bluetooth Technologie ausgestattet sind und die kommunikative Verbindung eine Bluetooth Funkverbindung ist.

12. System mit einem Aufzugsystem (1), in dem eine Aufzugkabine (10) zwischen Stockwerken (L1, L2, L3) eines Gebäudes (2) verfahrbar ist, wobei das System ausserdem umfasst:
ein Sensorsystem (4) mit einer Anzahl von Sensoren (4), die im Gebäude (2) an festgelegten Orten angeordnet sind, wobei eine kommunikative Verbindung zwischen einem der Sensoren (4) und einem mobilen elektronischen Gerät (28) eines Passagiers (30) entsteht, wenn das mobile elektronische Gerät (28) in Funkreichweite des Sensors (4) ist, wobei das elektronische Gerät (28) ein Mobiltelefon, ein Smartphone, eine Smartwatch oder ein Tablet PC ist, und wobei die Verbindungsdaten einen Ort des Sensors (4), der an der kommunikativen Verbindung beteiligt ist, eine Kennung des mobilen Geräts (28) und Zeitdaten der kommunikativen Verbindung umfassen; und
eine Auswerteeinrichtung (8, 12; 40), die die kommunikative Verbindung zwischen dem Sensor (4) und dem mobilen elektronischen Gerät (28) erkennt, Verbindungsdaten der kommunikativen Verbindung registriert und die Verbindungsdaten mit Daten, die in einer mindestens ein Verhaltensmuster aufweisenden Speichereinrichtung (15, 38) gespeichert sind, vergleicht, um zu erkennen, ob die Verbindungsdaten einem gespeicherten Verhaltensmuster entsprechen, wobei die Auswerteeinrichtung (8, 12; 40) eine Aktion erzeugt, wenn die Verbindungsdaten einem gespeicherten Verhaltensmuster entsprechen, wobei die Auswerteeinrichtung (8, 12; 40) das mobile elektronische Geräts (28) ansteuert, um den Passagier (30) mittels einer lesbaren und/oder hörbaren Mitteilung über die Aktion zu informieren, wobei die Auswerteeinrichtung (8, 12; 40) eine Serie von aufeinanderfolgenden kommunikativen Verbindungen erkennt, wobei das Registrieren der kommunikativen Verbindungen das Verhaltensmuster des mobilen Geräts (28) ergibt.

13. System (1) nach Anspruch 12, bei dem die Speichereinrichtung (15) im Aufzugsystem (1) angeordnet ist und eine Steuereinrichtung (8, 12) des Aufzugsystems (1) die Auswerteeinrichtung umfasst, wobei die Auswerteeinrichtung kommunikativ mit der Speichereinrichtung (15) gekoppelt ist.

14. System (1) nach Anspruch 12, bei dem die Speichereinrichtung (38) im mobilen Gerät (28) angeordnet ist und eine Prozessoreinrichtung (40) des mobilen Geräts (28) die Auswerteeinrichtung umfasst, wobei die Prozessoreinrichtung (40) den Vergleich und die Erzeugung der Aktion durchführt

15. System (1) nach einem der vorhergehenden Ansprüche 12 - 14, bei dem die Aktion einen Zielruf umfasst, der erzeugt wird, wenn die Verbindungsdaten einem gespeicherten Verhaltensmuster mit einer Nutzung des Aufzugsystems (1) entsprechen, wobei der Zielruf ein Einsteigestockwerk und ein Zielstockwerk definiert und wobei das Zielstockwerk in diesem Verhaltensmuster festgelegt ist, und/oder bei dem die Aktion einen Entriegelungsbefehl für eine Tür des Gebäudes (2) umfasst, der erzeugt wird, wenn die Verbindungsdaten einem gespeicherten Verhaltensmuster entsprechen, das ein Entriegeln einer Tür erfordert.

## Claims

1. Method for generating an action in a building (2) with at least one door and an elevator system (1) comprising an elevator car (10) which can be moved between floors (L1, L2, L3) of the building (2), comprising:
identifying a communicative connection between a sensor (4) of a sensor system comprising a large number of sensors (4) and a mobile electronic device (28) of a passenger (30), wherein the electronic device (28) is a mobile phone, a smartphone, a smart watch or a tablet PC;
registering connection data of the communicative connection, wherein the connection data comprise a location of the sensor (4) involved in the communicative connection, an identifier of the mobile device (28) and time data of the communicative connection;
comparing the connection data with data stored in a storage device (15, 38) in order to identify whether the connection data correspond to a stored behavior pattern;
if the connection data correspond to a stored behavior pattern, generating the action; and
activating the mobile electronic device (28) in order to inform the passenger (30) about the action by means of a readable and/or audible message,
wherein a series of successive communicative connections is identified, the registration of the communicative connections yielding the behavior pattern of the mobile device (28).

2. Method according to claim 1, wherein the action comprises a destination call which is generated when the connection data correspond to a stored behavior pattern with a use of the elevator system (1), the destination call defining a boarding floor and a destination floor, and the destination floor being defined in this behavior pattern.

3. Method according to claim 1, wherein the action comprises an unlocking command for a door of the building (2) which is generated when the connection data correspond to a stored behavior pattern which requires unlocking of a door.

4. Method according to any of the preceding claims, further comprising displaying at least one suggested destination if the connection data do not clearly correspond to a stored behavior pattern, the suggested destination corresponding to a best match between the connection data and a stored behavior pattern.

5. Method according to any of the preceding claims, wherein it is concluded from one or more communicative connections that the passenger (30) tends not to want to use the elevator system (1).

6. Method according to any of the preceding claims, further comprising reading of the storage device (15, 38) by a control device (8, 12) of the elevator system (1), the control device (8, 12) carrying out said comparison and said generation of the action.

7. Method according to any of claims 1 to 5, further comprising reading of the storage device (38) by a processor device (40) of the mobile device (28), the processor device (40) carrying out the comparison and the generation of the action.

8. Method according to any of the preceding claims, further comprising identifying a deactivation command, as a result of which the registration of the communicative connection between the sensor (4) and the mobile device (28) is deactivated.

9. Method according to any of the preceding claims, further comprising receiving, on the mobile device (28), at least one destination request defined by the passenger (30), which comprises a destination and an associated transport condition, and, if the transport condition is met, generating a corresponding destination call.

10. Method according to claim 9, further comprising carrying out a plausibility check in order to identify conflicts between multiple received destination requests.

11. Method according to any of the preceding claims, wherein the sensors (4) are equipped with Bluetooth technology and the communicative connection is a Bluetooth radio connection.

12. System comprising an elevator system (1) in which an elevator car (10) can be moved between floors (L1, L2, L3) of a building (2), the system further comprising:
a sensor system (4) comprising a number of sensors (4) which are arranged at fixed locations in the building (2), wherein a communicative connection between one of the sensors (4) and a mobile electronic device (28) of a passenger (30) arises when the mobile electronic device (28) is within radio range of the sensor (4), wherein the electronic device (28) is a mobile phone, a smartphone, a smart watch or a tablet PC, and wherein the connection data comprise a location of the sensor (4) involved in the communicative connection, an identifier of the mobile device (28) and time data of the communicative connection; and
an evaluation device (8, 12; 40) which identifies the communicative connection between the sensor (4) and the mobile electronic device (28), registers connection data of the communicative connection and compares the connection data with data stored in a storage device (15, 38) having at least one behavior pattern in order to identify whether the connection data correspond to a stored behavior pattern, wherein the evaluation device (8, 12; 40) generates an action if the connection data correspond to a stored behavior pattern, wherein the evaluation device (8, 12; 40) activates the mobile electronic device (28) in order to inform the passenger (30) about the action by means of a readable and/or audible message, wherein the evaluation device (8, 12; 40) identifies a series of successive communicative connections, the registration of the communicative connections yielding the behavior pattern of the mobile device (28).

13. System (1) according to claim 12, wherein the storage device (15) is arranged in the elevator system (1) and a control device (8, 12) of the elevator system (1) comprises the evaluation device, the evaluation device being communicatively coupled to the storage device (15).

14. System (1) according to claim 12, wherein the storage device (38) is arranged in the mobile device (28) and a processor device (40) of the mobile device (28) comprises the evaluation device, the processor device (40) carrying out the comparison and the generation of the action.

15. System (1) according to any of the preceding claims 12-14, wherein the action comprises a destination call which is generated when the connection data correspond to a stored behavior pattern with a use of the elevator system (1), the destination call defining a boarding floor and a destination floor and the destination floor being defined in this behavior pattern, and/or wherein the action comprises an unlocking command for a door of the building (2) which is generated when the connection data correspond to a stored behavior pattern which requires unlocking of a door.

## Revendications

1. Procédé permettant de générer une action dans un bâtiment (2) comportant au moins une porte et un système d'ascenseur (1) comportant une cabine d'ascenseur (10) qui peut être déplacée entre des étages (L1, L2, L3) du bâtiment (2), comprenant :
la détection d'une liaison de communication entre un capteur (4) d'un système de capteurs comprenant une pluralité de capteurs (4) et un appareil électronique mobile (28) d'un passager (30), l'appareil électronique (28) étant un téléphone mobile, un mobile multifonction, une montre connectée ou une tablette PC ;
l'enregistrement de données de liaison de la liaison de communication, les données de liaison comprenant un emplacement du capteur (4) impliqué dans la liaison de communication, un identifiant de l'appareil mobile (28) et des données temporelles de la liaison de communication ;
la comparaison des données de liaison avec des données mémorisées dans un dispositif de mémorisation (15, 38), afin de détecter si les données de liaison correspondent à un modèle de comportement mémorisé ;
si les données de liaison correspondent à un modèle de comportement mémorisé, la génération de l'action ; et
l'activation de l'appareil électronique mobile (28) afin d'informer le passager (30) de l'action au moyen d'un message lisible et/ou audible,
une série de liaisons de communication successives étant détectée, l'enregistrement des liaisons de communication produisant le modèle de comportement de l'appareil mobile (28).

2. Procédé selon la revendication 1, selon lequel l'action comprend un appel cible qui est généré si les données de liaison correspondent à un modèle de comportement mémorisé lié à une utilisation du système d'ascenseur (1), l'appel cible définissant un étage de montée et un étage cible, et l'étage cible étant établi dans ce modèle de comportement.

3. Procédé selon la revendication 1, selon lequel l'action comprend une instruction de déverrouillage d'une porte du bâtiment (2), laquelle instruction est générée si les données de liaison correspondent à un modèle de comportement mémorisé nécessitant le déverrouillage d'une porte.

4. Procédé selon l'une des revendications précédentes, comprenant en outre l'affichage d'au moins une suggestion cible si les données de liaison ne correspondent pas clairement à un modèle de comportement mémorisé, la suggestion cible correspondant à la meilleure adéquation entre les données de liaison et un modèle de comportement mémorisé.

5. Procédé selon l'une des revendications précédentes, selon lequel il est conclu à partir d'une ou de plusieurs liaisons de communication que le passager (30) a tendance à ne pas souhaiter utiliser le système d'ascenseur (1).

6. Procédé selon l'une des revendications précédentes, comprenant en outre la lecture du dispositif de mémorisation (15, 38) par un dispositif de commande (8, 12) du système d'ascenseur (1), le dispositif de commande (8, 12) réalisant ladite comparaison et ladite génération de l'action.

7. Procédé selon l'une des revendications 1 à 5, comprenant en outre la lecture du dispositif de mémorisation (38) par un dispositif processeur (40) de l'appareil mobile (28), le dispositif processeur (40) réalisant la comparaison et la génération de l'action.

8. Procédé selon l'une des revendications précédentes, comprenant en outre la détection d'une instruction de désactivation, par laquelle l'enregistrement de la liaison de communication entre le capteur (4) et l'appareil mobile (28) est désactivé.

9. Procédé selon l'une des revendications précédentes, comprenant en outre la réception sur l'appareil mobile (28) d'au moins une demande cible définie par le passager (30), laquelle demande cible comprend une destination cible et une condition de transport associée, et, si la condition de transport est satisfaite, la génération d'un appel cible correspondant.

10. Procédé selon la revendication 9, comprenant en outre la réalisation d'un contrôle de plausibilité afin de détecter des conflits entre une pluralité de demandes cibles reçues.

11. Procédé selon l'une des revendications précédentes, selon lequel les capteurs (4) sont équipés de technologie Bluetooth et la liaison de communication est une liaison radio Bluetooth.

12. Système comportant un système d'ascenseur (1) dans lequel une cabine d'ascenseur (10) peut être déplacée entre des étages (L1, L2, L3) d'un bâtiment (2), le système comprenant en outre :
un système de capteurs (4) comportant un certain nombre de capteurs (4) qui sont disposés dans le bâtiment (2) à des emplacements établis, une liaison de communication entre l'un des capteurs (4) et un appareil électronique mobile (28) d'un passager (30) étant créée si l'appareil électronique mobile (28) est à portée radio du capteur (4), l'appareil électronique (28) étant un téléphone mobile, un mobile multifonction, une montre connectée ou une tablette PC, et les données de liaison comprenant un emplacement du capteur (4) impliqué dans la liaison de communication, un identifiant de l'appareil mobile (28) et des données temporelles de la liaison de communication ; et
un dispositif d'évaluation (8, 12 ; 40), lequel détecte la liaison de communication entre le capteur (4) et l'appareil électronique mobile (28), enregistre des données de liaison de la liaison de communication et compare les données de liaison avec des données mémorisées dans un dispositif de mémorisation (15, 38) présentant au moins un modèle de comportement, afin de détecter si les données de liaison correspondent à un modèle de comportement mémorisé, le dispositif d'évaluation (8, 12 ; 40) générant une action si les données de liaison correspondent à un modèle de comportement mémorisé, le dispositif d'évaluation (8, 12 ; 40) activant l'appareil électronique mobile (28) afin d'informer le passager (30) de l'action au moyen d'un message lisible et/ou audible, le dispositif d'évaluation (8, 12 ; 40) détectant une série de liaisons de communication successives, l'enregistrement des liaisons de communication produisant le modèle de comportement de l'appareil mobile (28).

13. Système (1) selon la revendication 12, dans lequel le dispositif de mémorisation (15) est disposé dans le système d'ascenseur (1) et un dispositif de commande (8, 12) du système d'ascenseur (1) comprend le dispositif d'évaluation, le dispositif d'évaluation étant couplé en communication au dispositif de mémorisation (15).

14. Système (1) selon la revendication 12, dans lequel le dispositif de mémorisation (38) est disposé dans l'appareil mobile (28) et un dispositif processeur (40) de l'appareil mobile (28) comprend le dispositif d'évaluation, le dispositif processeur (40) réalisant la comparaison et la génération de l'action.

15. Système (1) selon l'une des revendications 12 à 14 précédentes, dans lequel l'action comprend un appel cible qui est généré si les données de liaison correspondent à un modèle de comportement mémorisé lié à une utilisation du système d'ascenseur (1), l'appel cible définissant un étage de montée et un étage cible et l'étage cible étant établi dans ce modèle de comportement, et/ou dans lequel l'action comprend une instruction de déverrouillage d'une porte du bâtiment (2), laquelle instruction est générée si les données de liaison correspondent à un modèle de comportement mémorisé nécessitant le déverrouillage d'une porte.
